# EUROPÄISCHE PATENTSCHRIFT

(11) **EP 3 215 317 B1**
(45) Veröffentlichungstag und Bekanntmachung des Hinweises auf die Patenterteilung: **19.03.2025**
(21) Anmeldenummer: 15795129.4
(22) Anmeldetag: 03.11.2015
(51) Int. Cl.: B27C 5/06, B25B 5/06, B25B 5/16

(54) **SPANNVORRICHTUNG**
CLAMPING DEVICE
DISPOSITIF DE SERRAGE

(30) Priorität: 03.11.2014 DE 102014222423
(43) Veröffentlichungstag der Anmeldung: 13.09.2017
(73) Patentinhaber: HOMAG GmbH, 72296 Schopfloch (DE)
(72) Erfinder: SCHMIEDER, Volker, 72116 Mössingen (DE); STURM, Christian, 72172 Sulz/Neckar (DE); FRIESE, Stefan, 72285 Pfalzgrafenweiler (DE)
(74) Vertreter: Hoffmann Eitle
(86) Internationale Anmeldenummer: PCT/EP2015/075620
(87) Internationale Veröffentlichungsnummer: WO 2016/071351

(56) Entgegenhaltungen:
- EP-A2- 1 053 823
- EP-A2- 1 077 112
- WO-A1-2014/072092
- DE-U1- 202012 002 940
- US-A- 2 928 320
- US-A- 4 558 854

## Beschreibung

### Technisches Gebiet

Die Erfindung betrifft eine Spannvorrichtung für ein Werkstück, insbesondere für ein Werkstück aus Holz, Kunststoff oder dergleichen, nach dem Oberbegriff von Anspruch 1.

### Stand der Technik

Bei der Bearbeitung von Werkstücken, wie insbesondere von Fenster- oder Türelementen, vorzugsweise aus Holz, Kunststoff oder dergleichen werden üblicherweise eine Vielzahl an verschiedenen Profilen in das Werkstück gefräst, wozu umfangreiche Bearbeitungen vor allem auch der seitlichen Flächen in Längsrichtung der Werkstücke notwendig sind.

Um den in jüngster Zeit steigenden Wunsch nach einem vermehrten Lichteinfall in Wohnräumen zu realisieren, wird die Breite der einzelnen Fensterteile neuerdings immer weiter reduziert. Dadurch weist das Werkstück nur noch eine geringe freie Spannfläche zur Fixierung des Werkstückes in einer Spannvorrichtung zur spanenden Bearbeitung auf. Typischerweise durchläuft ein solches Fensterelement mehrere Bearbeitungsschritte, wobei bei jedem Arbeitsschritt eine Seite konturiert wird. Vor allem das Einspannen von Fensterelementen mit einer fortgeschrittenen Profilierung ist aufgrund der geringen freien Spannfläche erschwert.

Aus dem Stand der Technik sind Spannvorrichtungen für die Bearbeitung von Werkstücken mit einem oberen Spannelement und mit einem unteren Spannelement bekannt, wobei das Werkstück zwischen diesen beiden Spannelementen einspannbar ist. Dabei liegen die beiden Spannelemente auf der unteren freien Auflagefläche und der oberen freien Auflagefläche der Fensterelemente auf. Allerdings können Werkstücke eine so geringe Länge aufweisen, dass sie nicht mehr sinnvoll zwischen mehreren Spannvorrichtungen fixierbar sind und dadurch bei einem Einspannen in nur einer Spannvorrichtung bei der spanenden Bearbeitung verdreht und/oder verschoben werden können.

Bisher bekannt sind aus der DE 101 37 839 C5 Spannvorrichtungen, die in ihrer Längsrichtung mehrere Anschläge aufweisen, wobei das Werkstück mit einer Längsseite an die Anschläge anlegbar ist, um eine seitliche Führung, quer zur Längsrichtung, zu gewährleisten.

Aus der DE 199 38 851 A1 sind Justieranschläge bekannt geworden, welche lösbar angeordnet sind und einer manuellen Ausrichtung des Werkstücks in einer Längsrichtung dienen.

Weiterhin ist aus der Druckschrift DE 10 2011 012 739 A1 das Vorsehen von mindestens einem Anschlag, der in einer Richtung quer zur Längsrichtung automatisiert so positionierbar ist, dass das Werkstück mit einer Seitenfläche an den mindestens einen Anschlag anlegbar ist, um das Werkstück während der Bearbeitung gegen ein mögliches Verdrehen in einer Ebene quer zur Längsrichtung abzusichern, bekannt.

Die Druckschrift DE 20 2007 040 580 offenbart Anschläge, die zu einer exakten Positionierung des Werkstücks verwendet werden, wobei diese Anschläge in einer Richtung quer zur Längsrichtung verstellbar sind.

Aus der Druckschrift DE 20 2012 002940 U1 ist eine Spannvorrichtung nach dem Oberbegriff von Anspruch 1 bekannt.

Die auf einer Seitenfläche bereits profilierten Fensterelemente weisen oftmals eine so geringe Spannfläche auf, dass die für eine stabile Fixierung notwendige Berührungsfläche zwischen den Spannelementen und dem Werkstück nicht vorhanden ist. Zudem kann ein Einspannen trotz der aus dem Stand der Technik bekannten Anschlagelemente aufgrund der geringen Werkstückhöhe dazu führen, dass im eingespannten Zustand die beiden Spannelemente so nahe beieinander sind, dass das Werkzeug das Werkstück nicht mehr erreicht. Weiterhin würden bereits profilierte Fensterelemente so eingespannt werden, dass das Fensterelement nach oben oder unten über die Spannelemente hinausragen würde und dadurch bei der Bearbeitung Werkstückschäden durch Biegebelastungen auftreten können.

### Darstellung der Erfindung, Aufgabe, Lösung, Vorteile

Der Erfindung liegt die Aufgabe zugrunde, eine Spannvorrichtung so auszubilden, dass auch schmale und/oder kurze Werkstücke, insbesondere auch mit bereits profilierten Seitenflächen, so stabil eingespannt werden können, dass eine spanende Bearbeitung auch ohne Gefahr eines Verrutschens oder Verdrehens des Werkstücks und/oder ohne Schädigung des Werkstücks möglich ist.

Diese Aufgabe wird mit den Merkmalen von Anspruch 1 gelöst.

Ein nicht erfindungsgemäßes Beispiel betrifft eine Spannvorrichtung für ein Werkstück, mit einem unteren Spannelement und einem oberen Spannelement, die eine Werkstückaufnahme bilden, wobei das obere Spannelement in der Höhe relativ zu dem unteren Spannelement verstellbar ist, wobei das Werkstück mindestens eine unterseitige und/oder eine oberseitige angeordnete Außenfläche aufweist und in die Spannvorrichtung einlegbar ist, mit einem Spannunterstützungselement, das in der Spannvorrichtung vorsehbar ist, wobei das Spannunterstützungselement mindestens eine oberseitig und/oder eine unterseitig angeordnete Außenfläche aufweist und das Werkstück und das Spannunterstützungselements gemeinsam in der Spannvorrichtung einspannbar sind, wobei bei einem Einspannen des Werkstücks und des Spannunterstützungselement in der Spannvorrichtung die mindestens eine unterseitig und/oder oberseitig angeordnete Außenfläche des Werkstücks und die mindestens eine oberseitig und/oder oberseitig angeordnete Außenfläche des Spannunterstützungselements flächig aufeinander liegen. Dies hat den Vorteil, dass damit auch ein Werkstück mit einer bereits vorbearbeiteten Seitenfläche im Bereich der vorbearbeiteten Seitenfläche sicher eingespannt werden kann, weil für eine Einspannung durch die Vorbearbeitung entstandene Fläche zur Einspannung benutzt wird. Dabei kann das Spannunterstützungselement nicht nur zur Positionierung verwendet werden, sondern es kann auch Kräfte aufnehmen, wie sie beim Spannen auf das Spannunterstützungselement wirken.

Dabei ist es vorteilhaft, wenn zumindest eine solche Spannvorrichtung oder mehrere davon in einem Werkstücktisch vorgesehen ist bzw. sind, mittels welchem zumindest einzelne Werkstücke in ihrer Längsrichtung bearbeitbar sind und diese Werkstücke und/oder das Spannunterstützungselement automatisiert in das Spannelement des Werkstücktischs einsetzbar ist. Dabei kann der Werkstücktisch Spannelemente zum Aufnehmen nur eines Werkstücks in einer Einspannposition aufweisen oder alternativ kann der Werkstücktisch auch Spannelemente zur Aufnahme eines Werkstücks in einer von sich gegenüberliegenden Einspannpositionen vorsehen.

Vorteilhafterweise weist die erfindungsgemäße Spannvorrichtung zwei untere Spannelemente und zwei obere Spannelement auf, so dass die Spannvorrichtung zwei Werkstückaufnahmen ausbildet. Dadurch können in einer Spannvorrichtung zwei Werkstücke zur gleichen Zeit aufgenommen und auch bearbeitet werden oder nach einem Umspannen auch eine gegenüberliegende Seitenfläche bearbeitet werden.

Zweckmäßigerweise liegen Werkstückaufnahmen bei einer erfindungsgemäßen Spannvorrichtung, die zwei Werkstückaufnahmen ausbildet, einander gegenüber, damit ein Umspannen zwischen den beiden Werkstückaufnahmen einfach zu ermöglichen ist.

Von Vorteil ist es, wenn das Spannunterstützungselement als getrenntes Bauteil ausgebildet ist und in die Spannvorrichtung einlegbar ist. Somit kann das Spannunterstützungselement passend zu einem Werkstück gewählt werden.

Weiterhin ist es zweckmäßig, wenn das untere und/oder obere Spannelement in der Art geformt ausgebildet ist/sind, dass das Spannunterstützungselement einteilig mit dem unteren und/oder oberen Spannelement ausgebildet ist. Somit kann gegebenenfalls der Arbeitsschritt des Einlegens des Spannunterstützungselements entfallen.

Vorteilhaft ist es weiterhin, wenn ein Spannunterstützungselement aus dem unteren Spannelement und/oder ein Spannunterstützungselement aus dem oberen Spannelement ausfahrbar ist/sind. Insbesondere ist es von Vorteil, wenn das Spannunterstützungselement in vertikaler Richtung ausfahrbar ist. Dies hat den Vorteil, dass ein Spannunterstützungselement nicht mehr gesondert einsetzbar ist, sondern bereits integriert ist und gesteuert ausfahrbar bzw. einfahrbar ist. Dies ist für einen automatisierten Bearbeitungsprozess besonders vorteilhaft.

Es ist auch zweckmäßig, dass das als eigenständiges Teil ausgebildete Spannunterstützungselement automatisiert in die Spannvorrichtung einlegbar ist. Dadurch kann die Taktrate bei der Bearbeitung gegebenenfalls reduziert werden und es ist auch vorteilhaft, dass ein geeignetes Spannunterstützungselement automatisiert ausgewählt und eingesetzt werden kann. Dadurch kann das Spannunterstützungselement optimal für das Werkstück ausgewählt werden.

Weiterhin ist es zweckmäßig, dass das als eigenständiges Teil ausgebildete Spannunterstützungselement automatisiert aus der Spannvorrichtung ausfahrbar ist.

Von Vorteil ist es, wenn das Spannunterstützungselement formschlüssig mit dem unteren Spannelement und/oder dem oberen Spannelement verbindbar ist, damit die Lage des Spannunterstützungselements relativ zum Spannelement eindeutig festgelegt ist, um dadurch eventuelle Beschädigungen des Werkstücks aufgrund einer falschen Positionierung des Spannunterstützungselements zu verhindern.

Damit ein Spannunterstützungselement für verschiedene Werkstücke verwendbar ist, ist es vorteilhaft, dass das Spannunterstützungselement abgestuft ausgebildet ist und eine Mehrzahl von oberseitigen Außenflächen aufweist, so dass ein jeweiliges Werkstück abhängig von seiner Gestalt auf eine der oberseitigen Außenflächen aufsetzbar ist.

Zweckmäßig ist, dass zumindest eine der oberseitigen Außenflächen der Spannvorrichtung derart oberflächenbehandelt ist, dass ihr Reibungskoeffizient zum Werkstück erhöht ist, wodurch schon bei geringerer Spannkraft eine höhere Haltekraft zwischen dem Werkstück und dem Spannunterstützungselement entsteht.

In diesem Fall ist es vorteilhaft, dass zumindest eine oberseitige Außenfläche mit einem Nadelkissen versehen ist oder nadelkissenartig ausgebildet ist. Dadurch wird eine bessere Haftung erreicht.

Gemäß der Erfindung weist die Spannvorrichtung zumindest ein Anschlagelement auf, welches in der Spannvorrichtung vorsehbar ist, so dass das Werkstück mit einer lateralen Außenfläche an dem zumindest einen Anschlagelement anlegbar ist, wodurch eine Sicherung gegen Verdrehung vor allem bei einem kürzeren Werkstück erreicht wird.

In diesem Fall ist es vorteilhaft, dass zumindest eines der Anschlagelemente durch ein Spannunterstützungselement ausgebildet ist. Dadurch wird kein gesondertes Anschlagelement benötigt.

Es ist zumindest eines der Anschlagelemente durch ein mit dem unteren Spannelement und/oder oberen Spannelement und/oder mit dem Spannunterstützungselement verbundenes Element ausgebildet. Ein solches verbundenes Element ist mit oder ohne Spannunterstützungselement anwendbar.

In diesem Fall ist es zweckmäßig, dass das verbundene Element ein mit dem unteren Spannelement und/oder dem oberen Spannelement und/oder mit dem oberen Spannelement verbindbares Steckelement oder Schraubelement ist. Dadurch ist ein schnelles Anbringen oder Entfernen des verbindbaren Steckelements möglich.

Es ist vorgesehen, dass das zumindest eine Anschlagelement aus dem unteren Spannelement und/oder aus dem oberen Spannelement ausfahrbar ist, insbesondere in vertikaler Richtung ausfahrbar ist. Dadurch können die Taktzeiten erhöht werden, weil das Ausfahren gegenüber einem Einsetzen weniger Zeit benötigt.

Die Aufgabe zu dem Verfahren wird mit den Merkmalen von Anspruch gelöst.

Ein Ausführungsbeispiel der Erfindung betrifft ein Verfahren zum Spannen eines Werkstücks in einer Spannvorrichtung nach Anspruch 12.

Weiterhin von Vorteil ist, dass das Spannunterstützungselement automatisiert in die Spannvorrichtung eingesetzt wird und/oder automatisiert aus dem unteren und/oder dem oberen Spannelement ausgefahren wird. Dies erhöht die Effektivität der Bearbeitung.

Zweckmäßig ist, dass das Spannunterstützungselement einteilig mit dem unteren und/oder dem oberen Spannelement ausgebildet ist und dieses so ausgebildete Spannelement in die Spannvorrichtung eingesetzt wird. Weiterhin ist vorteilhaft, dass das Werkstück eine laterale Außenfläche aufweist und zumindest ein Anschlagelement in der Spannvorrichtung vorgesehen ist, so dass das Werkstück mit einer lateralen Außenfläche an das zumindest eine Anschlagelement angelegt wird.

Weitere vorteilhafte Ausgestaltungen sind durch die nachfolgende Figurenbeschreibung und durch die Unteransprüche beschrieben.

### Kurze Beschreibung der Figuren der Zeichnung

Nachstehend wird die Erfindung auf der Grundlage zumindest eines Ausführungsbeispiels anhand der Figuren der Zeichnung näher erläutert. Es zeigen:
- Fig. 1: eine Seitenansicht eines Ausführungsbeispiels einer nicht erfindungsgemäßen Spannvorrichtung mit einem Spannunterstützungselement,
- Fig. 2: eine Seitenansicht eines zweiten Ausführungsbeispiels einer nicht erfindungsgemäßen Spannvorrichtung mit einem unteren Spannelement, das ein Spannunterstützungselement einteilig ausbildet,
- Fig. 3: eine Seitenansicht eines dritten Ausführungsbeispiels einer nicht erfindungsgemäßen Spannvorrichtung mit einem stufenförmigen Spannunterstützungselement,
- Fig. 4: eine Seitenansicht eines weiteren Ausführungsbeispiels einer Spannvorrichtung mit Anschlagelementen, und
- Fig. 5: eine Draufsicht eines weiteres Ausführungsbeispiels der erfindungsgemäßen Spannvorrichtung mit Anschlagelementen.

### Bevorzugte Ausführung der Erfindung

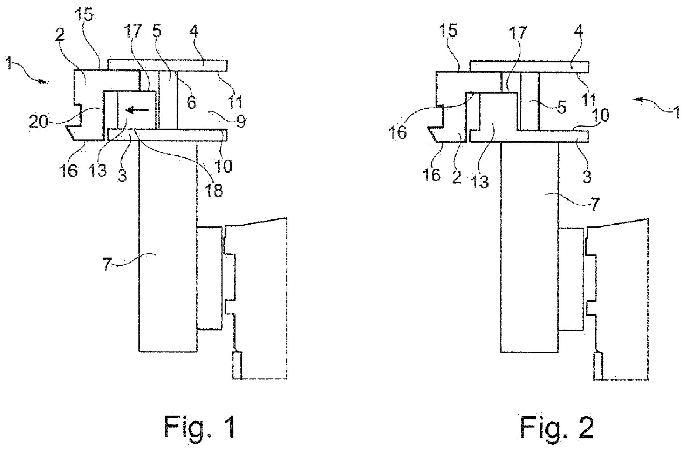

Die Figur 1 zeigt eine Spannvorrichtung 1 zum Einspannen von Werkstücken 2 aus Holz, Kunststoff oder dergleichen, um diese in einer Bearbeitungsvorrichtung bearbeiten zu können.

Die Spannvorrichtung 1 weist ein unteres Spannelement 3 und ein oberes Spannelement 4 auf. Das obere Spannelement 4 ist in der Höhe relativ zu dem in der Höhe nicht bewegbar angeordneten unteren Spannelement 3 bewegbar. Alternativ kann das untere Spannelement 3 auch in der Höhe bewegbar sein.

Das obere Spannelement 4 weist eine Plattenform oder eine plattenähnliche Form auf und ist fest mit einer Positionierungsstange 5 verbunden. Die Verbindung erfolgt an einem oberen Ende 6 der Positionierungsstange 5, wie es in Figur 1 zu erkennen ist. Dies kann gegebenenfalls auch anderweitig gelöst werden. Diese Verbindung zwischen dem oberen Spannelement 4 und der Positionierungsstange 5 ist vorteilhafterweise geschraubt, wobei es weiterhin möglich ist, die Positionierungsstange 5 und das obere Spannelement 4 als ein einteiliges Bauteil auszubilden.

Das untere Spannelement 3 weist, wie in Figur 1 gezeigt, eine Plattenform oder eine plattenähnliche Form auf und ist fest mit dem Werkstücktisch 7 verbunden, wobei diese Verbindung vorteilhafterweise insbesondere in vertikaler Richtung geschraubt ist. Diese Verbindung kann auch anderweitig ausgebildet werden.

Die Positionierungsstange 5 ist mit einem unterhalb des unteren Spannelements 3 liegenden nicht gezeigten Antriebsmechanismus verbunden. Daher hat das untere Spannelement 3 eine Öffnung oder Aussparung, damit die Positionierungsstange 5 in ihrer Längsrichtung durch das untere Spannelement 3 in vertikaler Richtung hindurch verlaufend angeordnet sein kann. Auch ist es möglich, dass die unteren Spannelemente 3 aus zwei einzelnen Platten oder plattenähnlichen Bauteilen ausgebildet sind, wobei diese mit dem Werkstücktisch 7 fest verbunden sind und die Positionierungsstange 5 zwischen den beiden gegenüberliegenden unteren Spannelementen 3 in vertikaler Richtung verläuft.

Das nicht dargestellte untere Ende der Positionierungsstange 5 ist derart mit einem nicht dargestellten Antriebsmechanismus verbunden, dass die Höhenposition der Positionierungsstange 5 in vertikaler Richtung verändert werden kann. Da die Positionierungsstange 5 fest mit dem oberen Spannelement 4 verbunden ist, kann durch den nicht gezeigten Antriebsmechanismus der vertikale Abstand des oberen Spannelements 4 zu dem unteren Spannelement 3 verändert werden. Möglich ist, dass der Antriebsmechanismus ein hydraulischer, pneumatischer oder elektromotorischer Antrieb ist.

Das untere Spannelement 3 und das obere Spannelement 4 bilden gemeinsam eine Werkstückaufnahme 9. An einer Oberseite weist das untere Spannelement 3 mindestens eine Auflagefläche 10 auf und das obere Spannelement 4 weist an einer Unterseite mindestens eine Kontaktfläche 11 auf. In einer Fortbildung der Spannelemente können an der Auflagefläche 10 des unteren Spannelements 3 und/oder an der Kontaktfläche 11 des oberen Spannelements 4 auch nicht gezeigte Spannbeläge angebracht sein, welche dem Schutz des Werkstücks 2 und dessen Oberfläche oder einer besseren Fixierung des Werkstücks 2 dienen können. Beispielsweise können solche Spannbeläge aus Kunststoff oder gummiartigem Material ausgebildet sein.

Die Spannvorrichtung 1 weist mindestens ein oberes Spannelement 4 auf.

Sind zwei obere Spannelemente 4 vorgesehen, können diese insbesondere als einteiliges Bauteil ausgebildet sein. Sie können auch zweiteilig ausgebildet sein. Die Spannvorrichtung 1 weist mindestens ein unteres Spannelement 3 auf. Sind zwei untere Spannelemente 3 vorgesehen, können diese als zwei getrennte Bauteile ausgebildet sein oder als gemeinsames Bauteil verbunden ausgebildet sein. Das in der Figur 1 dargestellte Ausführungsbeispiel der Spannvorrichtung 1 weist jeweils zwei obere Spannelemente 4 und zwei untere Spannelemente 3 auf und bildet somit zwei Werkstückaufnahmen 9 aus.

Bei einer Spannvorrichtung 1 gemäß Figur 1 mit zwei Werkstückaufnahmen 9 liegen diese beiden Werkstückaufnahmen 9 vorteilhafterweise einander gegenüber.

In der Werkstückaufnahme 9 der Spannvorrichtung 1 ist zusätzlich zum Werkstück 2 ein Spannunterstützungselement 13 vorgesehen, wobei das Spannunterstützungselement 13 und das Werkstück 2 gemeinsam einspannbar sind.

Das Spannunterstützungselement 13 kann, wie in Figur 1 gezeigt, ein zusätzliches einlegbares Teil sein. Das Einlegen des Spannunterstützungselements 13 in die Werkstückaufnahme 9 kann automatisiert oder manuell durch mindestens einen Maschinenbediener erfolgen. Vorteilhafterweise kann die Spannvorrichtung 1 auch mindestens ein nicht dargestelltes Anschlagelement aufweisen, welches für eine exakte Ausrichtung des Spannunterstützungselements 13 sorgen kann. Das Herausnehmen des Spannunterstützungselements 13 aus der Werkstückaufnahme 9 kann manuell durch mindestens einen Maschinenbediener erfolgen. Weiterhin möglich ist ein automatisiertes Herausnehmen des Spannunterstützungselements 13.

Zweckmäßigerweise sind das Spannunterstützungselement 13 und das untere Spannelement 4 oder das obere Spannelement 3 miteinander formschlüssig verbindbar. Gemäß Figur 1 ist eine formschlüssige Verbindung des einlegbaren Spannunterstützungselements 13 mit dem unteren Spannelement 3 zweckmäßig.

Das in die Spannvorrichtung 1 für die Bearbeitung einlegbare und einzuspannende Werkstück 2 weist mindestens eine Oberseitenfläche 15 auf, die eine oberseitig angeordnete Außenfläche ist, und eine Unterseitenfläche 16, die eine unterseitig angeordnete Außenfläche ist. Bei bereits mehrfach bearbeiteten Werkstücken 2 bilden sich typischerweise eine Mehrzahl von Oberseitenflächen 15 und Unterseitenflächen 16 aus. Die Fläche der einzelnen Oberseitenflächen 15 oder einzelnen Unterseitenflächen 16 können relativ zu der Kontaktfläche 11 am oberen Spannelement 4 oder der Auflagefläche 10 am unteren Spannelement 3 gering sein, so dass eine genügende Spannfläche fehlen würde.

Das Spannunterstützungselement 13 weist mindestens eine Oberfläche 17 auf, die eine oberseitig angeordnete Außenfläche ist, und/oder mindestens eine Unterfläche 18, die eine unterseitig angeordnete Außenfläche ist. Die Kontur der Außenfläche des Spannunterstützungselements 13 ist so gestaltet, dass in einem eingespannten Zustand mindestens eine Oberfläche 17 des Spannunterstützungselements 13 mit einer Unterseitenfläche 16 des Werkstücks 2 flächig aufeinander liegen oder mindestens eine Unterfläche 18 des Spannunterstützungselements 13 mit einer Oberseitenfläche 15 des Werkstücks 2 flächig aufeinander liegen.

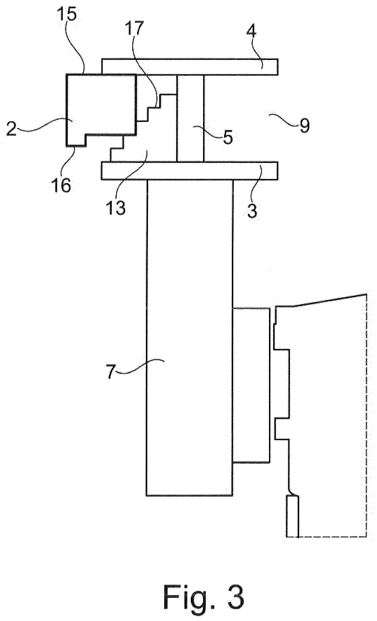

Gemäß Figur 1 weist das Spannunterstützungselement eine Oberfläche 17 und eine Unterfläche 18 auf. Wie in Figur 3 dargestellt, kann das Spannunterstützungselement 13 auch eine Mehrzahl von Oberflächen 17 oder eine Mehrzahl von Unterflächen 18 aufweisen. In Figur 1 ist der Querschnitt des Spannunterstützungselements 13 etwa rechteckig. In Figur 3 weist das Spannunterstützungselement 13 einen stufenförmigen Querschnitt mit mehreren Oberflächen 17 auf.

Die Anordnung und Ausgestaltung der Oberflächen 17 oder Unterflächen 18 des Spannunterstützungselements 13 kann an die Gestalt der Oberseitenflächen 15 des Werkstücks 2 oder der Unterseitenflächen 16 des Werkstücks 2 in der Art angepasst sein, dass die waagrechte Berührungsfläche zwischen dem Werkstück 2 und dem Spannunterstützungselement 13 möglichst groß ist. Daher ist die Mehrzahl von Oberflächen 17 oder Unterflächen 18 typischerweise, wie in Figur 3 gezeigt, abgestuft zueinander angeordnet.

Die Figur 2 zeigt ein weiteres Ausführungsbeispiel einer Spannvorrichtung 1, bei welcher das untere Spannelement 3 derart ausgebildet ist, dass das Spannunterstützungselement 13 einteilig mit dem unteren Spannelement 3 ausgebildet ist. Weiterhin möglich ist, dass das obere Spannelement 4 derart ausgebildet ist, dass das Spannunterstützungselement 13 einteilig mit dem oberen Spannelement 4 ausgebildet sein kann. Die weiteren Merkmale entsprechen im Wesentlichen den in Figur 1 gezeigten.

In einer vorteilhaften nicht dargestellten Weiterbildung der Spannvorrichtung 1 ist diese derart ausgebildet, dass ein Spannunterstützungselement 13 in die Werkstückaufnahme 9 ausfahrbar ist. Vorteilhafterweise ist ein Spannunterstützungselement 13 aus dem oberen Spannelement 3 und/oder dem unteren Spannelement 4 in die Werkstückaufnahme ausfahrbar ausgebildet. Insbesondere das Ausfahren eines Spannunterstützungselements 13 in vertikaler Richtung ist zweckmäßig. Das Ausfahren kann dabei sowohl automatisiert als auch manuell erfolgen.

Die Spannvorrichtung 1 weist also mindestens eine Werkstückaufnahme 9 auf, wobei in der mindestens einen Werkstückaufnahme 9 ein Spannunterstützungselement 13 vorgesehen ist, welches als zusätzliches einlegbares Bauteil gestaltet sein kann oder einteilig mit dem unteren Spannelement 3 ausgebildet sein kann oder mit dem oberen Spannelement 4 einteilig ausgebildet sein kann oder ausfahrbar sein kann.

Vorteilhafterweise sind die Kontaktfläche 11 des oberen Spannelements 4 oder die Auflagefläche 10 des unteren Spannelements 3 oder eine Mehrzahl von Oberflächen 11 und/oder Unterflächen 18 des Spannunterstützungselements 13, derart oberflächenbehandelt, dass der Reibungskoeffizient zwischen den beteiligten Flächen erhöht ist. Typischerweise sind diese Flächen aufgeraut oder geeignet beschichtet, wie beispielsweise sandgestrahlt. Vorteilhaft können die Oberflächen auch als Nadelkissen oder nadelkissenartig ausgebildet sein. Dies kann durch kurze, dünne, nadelartige Elemente erreicht werden, die beispielsweise senkrecht zur Außenfläche angeordnet sind und dem Werkstück 3 aus Holz einen zusätzlichen Halt verleihen.

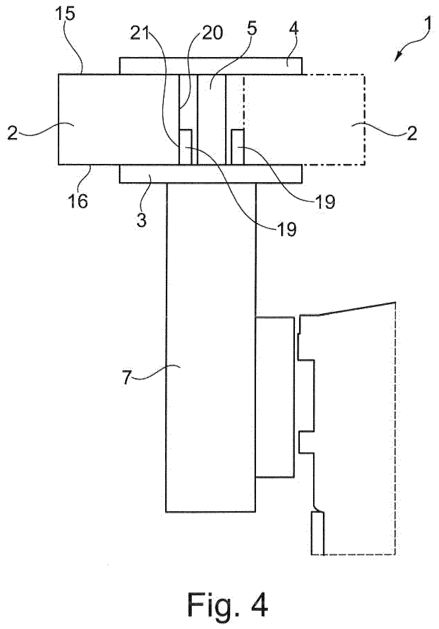

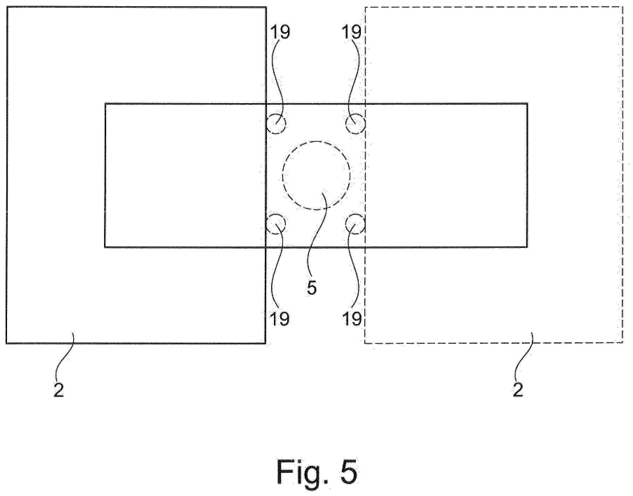

Die Figur 4 zeigt eine Spannvorrichtung 1 mit mindestens einem Anschlagelement 19, welches in der Werkstückaufnahme 9 angeordnet ist, wobei das Werkstück 1 mit mindestens einer lateralen Außenfläche 20 an eine Seitenfläche 21 des Anschlagelements 19 anlegbar ist. Figur 4 und Figur 5 zeigen Ausführungsformen, bei welchen zwei Anschlagelemente 19 vorgesehen sind, um eine Rotation des Werkstücks 2 in der Werkstückaufnahme 9 zu verhindern.

In einer vorteilhaften Weiterbildung einer Spannvorrichtung 1 bildet das vorgesehene Spannunterstützungselement 13 das zumindest eine Anschlagelement 19 selbst aus, wobei in einem eingespannten Zustand mindestens eine vertikale Berührungsfläche und mindestens eine horizontale Berührungsfläche zwischen dem Werkstück 2 und dem Spannunterstützungselement 13 vorhanden sind und sich das Werkstück 2 und das Spannunterstützungselement 13 mit diesen Berührungsflächen auch berührt.

Vorteilhafterweise ist ein Anschlagelement 19 als ein Element, welches mit dem oberen Spannelement 4 und/oder dem unteren Spannelement 3 und/oder dem Spannunterstützungselement verbindbar ist, ausgebildet, wobei das eine Element zum Zweck der Verbindung insbesondere als Schraubenelement oder als Steckelement ausgebildet sein kann.

Alternativ ist es vorteilhaft, wenn das zumindest eine Anschlagelement 19 aus dem unteren Spannelement 3 und/oder dem oberen Spannelement 4 ausfahrbar ist, wie in Richtung der Werkstückaufnahme 9, insbesondere in vertikaler Richtung. Das Ausfahren der Anschlagelemente 19 erfolgt zweckmäßigerweise automatisiert.

Der Vorgang des Einspannens wird nachfolgend näher erläutert.

Zum Einspannen eines Werkstücks 2 in die erfindungsgemäße Spannvorrichtung 1 fährt der Antriebsmechanismus das obere Spannelement 4 in eine genügend hohe Position. Danach wird das Werkstück 2 in die Spannvorrichtung eingelegt, wobei das Einlegen automatisiert von einem Greifer oder Manipulator oder manuell durch mindestens einen Maschinenbediener erfolgt. Vor dem Einlegen des Werkstücks 2 kann bei Bedarf das Spannunterstützungselement 13 in der Spannvorrichtung 1 vorgesehen sein. Vorteilhafterweise wird das Spannunterstützungselement 13 automatisiert oder manuell in die Spannvorrichtung 1 eingesetzt und automatisiert oder manuell aus der Spannvorrichtung 1 ausgefahren. Weiterhin möglich ist, dass das Spannunterstützungselement 13 einteilig mit dem unteren Spannelement 3 und/oder mit dem oberen Spannelement 4 ausgebildet ist und das untere Spannelement 3 und/oder das obere Spannelement 4 in die Spannvorrichtung 1 eingesetzt wird/werden. Nach der Positionierung des Werkstücks 2 wird das obere Spannelement 4 nach unten gefahren, so dass das Werkstück 2 und das Spannunterstützungselement 13 gemeinsam in der Spannvorrichtung 1 eingespannt werden, in der Art, dass mindestens eine Oberfläche 17 des Spannunterstützungselements 13 mit einer Unterseitenfläche 16 des Werkstücks 2 flächig aufeinander liegen oder mindestens eine Unterfläche 18 des Spannunterstützungselements 13 mit einer Oberseitenfläche 15 des Werkstücks 2 flächig aufeinander liegen.

Weiterhin möglich ist, dass die Spannvorrichtung 1 alternativ oder zusätzlich zumindest ein Anschlagelement 19 aufweist, wobei das Werkstück 2 so in die Spannvorrichtung 1 eingelegt wird, dass eine laterale Seitenfläche 20 des Werkstücks 2 an zumindest einer Seitenfläche des Anschlagelements 19 anliegt.

Die Figuren deuten ein mögliches Vorgehen bei der Bearbeitung der Werkstücke 2 mit einer Spannvorrichtung 1, die zwei Werkstückaufnahmen 9 aufweist, an, wobei zuerst durch Einspannen des Werkstückes 2 in einer der beiden Werkstückaufnahmen 9 eine der lateralen Seitenfläche 20 des Werkstückes 2 konturiert werden kann. Danach wird das Werkstück 2 ohne Drehung in die andere Werkstückaufnahme 9 eingesetzt oder alternativ wird das Werkstück 2 um 180° gedreht und in die gleiche Werkstückaufnahme 9 eingesetzt, so dass eine andere der lateralen Seitenflächen 20 bearbeitet werden kann. Vorteilhaft ist insbesondere bei dem zweiten Bearbeitungsschritt das Vorsehen eines Spannunterstützungselements 13, um eine bereits konturierte Außenfläche besser einspannen zu können.

### Bezugszeichenliste

- 1: Spannvorrichtung
- 2: Werkstück
- 3: unteres Spannelement
- 4: oberes Spannelement
- 5: Positionierungsstange
- 6: oberes Ende der Positionierungsstange
- 7: Werkstücktisch
- 9: Werkstückaufnahme
- 10: Auflagefläche des unteren Spannelements
- 11: Kontaktfläche des oberen Spannelements
- 13: Spannunterstützungselement
- 15: Oberseitenfläche des Werkstücks
- 16: Unterseitenfläche des Werkstücks
- 17: Oberfläche des Spannunterstützungselement
- 18: Unterfläche des Spannunterstützungselement
- 19: Anschlagelement der Werkstückaufnahme
- 20: laterale Seitenfläche des Werkstückes
- 21: Seitenfläche des Anschlagelements

## Patentansprüche

1. Spannvorrichtung (1) für ein Werkstück (2), mit einem unteren Spannelement (3) und einem oberen Spannelement (4), die eine Werkstückaufnahme (9) bilden, wobei das obere Spannelement (4) in der Höhe relativ zu dem unteren Spannelement (3) verstellbar ist, wobei das Werkstück (2) mindestens eine unterseitig und/oder oberseitig angeordnete Außenfläche (16) und eine laterale Außenfläche (20) aufweist und in die Spannvorrichtung (1) einlegbar ist, weiterhin mit zumindest einem Anschlagelement (19), welches in der Spannvorrichtung (1) vorsehbar ist, so dass das Werkstück (2) mit seiner lateralen Außenfläche (20) an dem zumindest einen Anschlagelement (19) anlegbar ist, wobei zumindest eines der Anschlagelemente (19) durch ein mit dem unteren Spannelement (3) und/oder mit dem oberen Spannelement (4) verbundenen Element ausgebildet ist, **dadurch gekennzeichnet, dass** zumindest ein Anschlagelement (19) aus dem unteren Spannelement (3) und/oder aus dem oberen Spannelement (4) ausfahrbar ist.

2. Spannvorrichtung (1) nach Anspruch 1, **dadurch gekennzeichnet, dass** das verbundene Element ein mit dem unteren Spannelement (3) und/oder mit dem oberen Spannelement (4) verbindbares Steckelement oder Schraubelement ist.

3. Spannvorrichtung (1) nach einem der vorherigen Ansprüche, **dadurch gekennzeichnet, dass** zumindest eines der Anschlagelemente (19) durch ein Spannunterstützungselement (13) ausgebildet ist.

4. Spannvorrichtung (1) nach Anspruch 3, **dadurch gekennzeichnet, dass** das Spannunterstützungselement (13) als eigenständiges Teil ausgebildet ist und automatisiert aus der Spannvorrichtung (1) ausfahrbar ist.

5. Spannvorrichtung (1) nach einem der vorherigen Ansprüche, **dadurch gekennzeichnet, dass** die Spannvorrichtung (1) zwei untere Spannelemente (3) und zwei obere Spannelemente (4) aufweist.

6. Spannvorrichtung (1) nach einem der vorherigen Ansprüche, **dadurch gekennzeichnet, dass** das obere Spannelement (4) eine Plattenform oder eine plattenähnliche Form aufweist und fest mit einer Positionierungsstange (5) verbunden ist, wobei die Positionierungsstange (5) mit einem unterhalb des unteren Spannelements (3) liegenden Antriebsmechanismus verbunden ist.

7. Spannvorrichtung (1) nach Anspruch 6, **dadurch gekennzeichnet, dass** die Positionierungsstange (5) derart mit dem Antriebsmechanismus verbunden ist, dass die Höhenposition der Positionierungsstange (5) in vertikaler Richtung verändert werden kann, wobei damit der vertikale Abstand des oberen Spannelements (4) zu dem unteren Spannelement (3) veränderbar ist.

8. Spannvorrichtung (1) nach einem der vorherigen Ansprüche, **dadurch gekennzeichnet, dass** der Antriebsmechanismus ein hydraulischer, pneumatisch oder elektromotorischer Antrieb ist.

9. Spannvorrichtung (1) nach einem der vorherigen Ansprüche 6 bis 8, **dadurch gekennzeichnet, dass** das untere Spannelement (3) eine Öffnung oder Aussparung aufweist, damit die Positionierungsstange (5) in ihrer Längsrichtung durch das untere Spannelement (3) in vertikaler Richtung hindurch verlaufend angeordnet ist.

10. Werkstücktisch aufweisend zumindest eine Spannvorrichtung (1) oder mehrere Spannvorrichtungen (1) nach einem der Ansprüche 1 bis 9, mittels welchem zumindest einzelne Werkstücke in ihrer Längsrichtung bearbeitbar sind, und diese Werkstücke automatisiert in das Spannelement des Werkstücktisches einsetzbar sind.

11. Werkstücktisch nach Anspruch 10, **dadurch gekennzeichnet, dass** die Spannvorrichtung zwei untere Spannelemente und zwei obere Spannelementen aufweist, so dass die Spannvorrichtung zwei Werkstückaufnahmen ausbildet, wodurch zwei Werkstücke zur gleichen Zeit aufgenommen und auch bearbeitet werden oder nach einem Umspannen auch eine gegenüberliegende Seitenfläche bearbeitet werden kann.

12. Verfahren zum Einspannen eines Werkstücks in eine Spannvorrichtung (1) nach einem der Ansprüche 1 bis 9, aufweisend folgende Schritte:
- Verfahren des Antriebsmechanismus des oberen Spannelements (4) in eine genügend hohe Position,
- Einlegen des Werkstücks (2) in die Spannvorrichtung (1), wobei das Einlegen automatisiert von einem Greifer oder Manipulator oder manuell durch mindestens einen Maschinenbediener erfolgt,
- nach unten fahren des oberen Spannelements (4) nach der Positionierung des Werkstücks (2),
wobei die Spannungsvorrichtung (1) zumindest ein Anschlagelement (19) aufweist, wobei das Werkstück (2) so in die Spannvorrichtung (1) eingelegt wird, dass eine laterale Seitenfläche des Werkstücks (2) an zumindest einer Seitenfläche des Anschlagelements (19) anliegt.

13. Verfahren nach Anspruch 12, **dadurch gekennzeichnet, dass** zuerst durch Einspannen des Werkstücks (2) in einer der beiden Werkstückaufnahmen (9) eine der lateralen Seitenflächen (20) des Werkstücks (2) konturiert werden kann, wobei danach das Werkstück (2) ohne Drehung in die andere Werkstückaufnahme (9) eingesetzt wird, so das eine andere der lateralen Seitenfläche (20) bearbeitet werden kann.

14. Verfahren nach einem der Ansprüche 12 oder 13, **dadurch gekennzeichnet, dass** die Spannvorrichtung (1) zwei Werkstückaufnahmen (9) aufweist, wobei zuerst durch Einspannen des Werkstückes (2) in einer der beiden Werkstückaufnahmen (9) eine der lateralen Seitenfläche (20) des Werkstückes (2) konturiert wird, wobei das Werkstück danach ohne Drehung in die andere Werkstückaufnahme (9) eingesetzt wird, wobei danach eine andere der lateralen Seitenflächen (20) bearbeitet wird.

## Claims

1. A clamping device (1) for a workpiece (2), with a lower clamping element (3) and an upper clamping element (4) which form a workpiece holder (9), wherein the height of the upper clamping element (4) is adjustable relative to the lower clamping element (3), wherein the workpiece (2) has at least one outer surface (16) arranged on the lower side and/or upper side and has a lateral outer surface (20) and can be inserted into the clamping device (1), further with at least one stop element (19) which can be provided in the clamping device (1) so that the workpiece (2) can be placed with its lateral outer surface (20) against the at least one stop element (19), wherein at least one of the stop elements (19) is formed by an element connected to the lower clamping element (3) and/or to the upper clamping element (4), **characterised in that** at least one stop element (19) is extendable out of the lower clamping element (3) and/or out of the upper clamping element (4).

2. The clamping device (1) as claimed in claim 1, **characterised in that** the connected element is a plug-in element or screw element which is connectable to the lower clamping element (3) and/or to the upper clamping element (4).

3. The clamping device (1) as claimed in any one of the preceding claims, **characterised in that** at least one of the stop elements (19) is formed by a clamping support element (13).

4. The clamping device (1) as claimed in claim 3, **characterised in that** the clamping support element (13) is formed as a separate part and extendable from the clamping device (1) in an automated manner.

5. The clamping device (1) as claimed in any one of the preceding claims, **characterised in that** the clamping device (1) has two lower clamping elements (3) and two upper clamping elements (4).

6. The clamping device (1) as claimed in any one of the preceding claims, **characterised in that** the upper clamping element (4) has a plate shape or a platelike shape and is fixedly connected to a positioning rod (5), wherein the positioning rod (5) is connected to a drive mechanism lying below the lower clamping element (3).

7. The clamping device (1) as claimed in claim 6, **characterised in that** the positioning rod (5) is connected to a drive mechanism so that the height position of the positioning rod (5) can be changed in the vertical direction, wherein, thus, the vertical distance of the upper clamping element (4) to the lower clamping element (3) can be changed.

8. The clamping device (1) as claimed in any one of the preceding claims, **characterised in that** the drive mechanism is a hydraulic, pneumatic or electromotive drive.

9. The clamping device (1) as claimed in any one of the preceding claims 6 to 8, **characterised in that** the lower clamping element (3) has an opening or a recess, thus the longitudinal direction of the positioning rod (5) is arranged running through the lower clamping element (3) in the vertical direction.

10. A workpiece table having at least one clamping device (1) or several clamping devices (1) as claimed in any one of claims 1 to 9, by means of which the longitudinal direction of at least individual workpieces can be machined and these workpieces can be inserted in the clamping element of the workpiece table in an automated manner.

11. The workpiece table as claimed in claim 10, **characterised in that** the clamping device has two lower clamping elements and two upper clamping elements so that the clamping device forms two workpiece holders, whereby two workpieces are received and also machined at the same time or an opposite side surface can also be machined after reclamping.

12. A method for clamping a workpiece in a clamping device (1) as claimed in any one of claims 1 to 9, having the following steps:
- bringing the drive mechanism of the upper clamping element (4) to a position which is sufficiently high,
- inserting the workpiece (2) into the clamping device (1), wherein the inserting is, wherein the inserting is in an automated manner by a gripper or a manipulator or manually through at least one machine operator,
- driving the upper clamping element (4) downwards after positioning of the workpiece (2),
wherein the clamping device (1) has a least one stop element (19), wherein the workpiece (2) is inserted into the clamping device (1) so that a lateral side surface of the workpiece (2) is placed against at least one side surface of the stop element (19).

13. The method according to claim 12, **characterised in that** first, by clamping the workpiece (2) into one of the two workpiece holders (9), one of the lateral side surfaces (20) of the workpiece (2) can be contoured, wherein afterwards, the workpiece (2) can be inserted into the other workpiece holder (9) without rotation so that another one of the lateral side surfaces (20) can be machined.

14. The method according to any one of claims 12 or 13, **characterised in that** the clamping device (1) has two workpiece holders (9), wherein first, by clamping the workpiece (2) into one of the two workpiece holders (9), one of the lateral side surfaces (20) of the workpiece (2) is contoured, wherein afterwards, the workpiece is inserted into the other workpiece holder (9) without rotation, wherein afterwards, another one of the lateral side surfaces (20) is machined.

## Revendications

1. Dispositif de serrage (1) pour une pièce à usiner (2), ledit dispositif comprenant un élément de serrage inférieur (3) et un élément de serrage supérieur (4) qui forment un logement de pièces à usiner (9), où l'élément de serrage supérieur (4) est réglable en hauteur par rapport à l'élément de serrage inférieur (3), où la pièce à usiner (2) présente au moins une surface extérieure (16) disposée sur le côté inférieur et/ou sur le côté supérieur et présente une surface extérieure latérale (20), et ladite pièce à usiner peut être introduite dans le dispositif de serrage (1), en ayant en outre au moins un élément de butée (19) qui peut être prévu dans le dispositif de serrage (1), de sorte que la pièce à usiner (2), avec sa surface extérieure latérale (20), peut venir en appui sur l'au moins un élément de butée (19), où au moins l'un des éléments de butée (19) est formé par un élément relié à l'élément de serrage inférieur (3) et/ou à l'élément de serrage supérieur (4), **caractérisé en ce qu'**au moins un élément de butée (19) peut être sorti de l'élément de serrage inférieur (3) et/ou de l'élément de serrage supérieur (4).

2. Dispositif de serrage (1) selon la revendication 1, **caractérisé en ce que** l'élément relié est un élément enfichable ou un élément à vis pouvant être relié à l'élément de serrage inférieur (3) et/ou à l'élément de serrage supérieur (4).

3. Dispositif de serrage (1) selon l'une des revendications précédentes, **caractérisé en ce qu'**au moins un des éléments de butée (19) est formé par un élément de support de serrage (13).

4. Dispositif de serrage (1) selon la revendication 3, **caractérisé en ce que** l'élément de support de serrage (13) est conçu comme une pièce indépendante et peut être sorti du dispositif de serrage (1) de manière automatisée.

5. Dispositif de serrage (1) selon l'une quelconque des revendications précédentes, **caractérisé en ce que** le dispositif de serrage (1) présente deux éléments de serrage inférieurs (3) et deux éléments de serrage supérieurs (4).

6. Dispositif de serrage (1) selon l'une quelconque des revendications précédentes, **caractérisé en ce que** l'élément de serrage supérieur (4) présente une plateforme ou une forme semblable à une plaque et est relié fixement à une tige de positionnement (5), où la tige de positionnement (5) est reliée à un mécanisme d'entraînement se trouvant au-dessous de l'élément de serrage inférieur (3).

7. Dispositif de serrage (1) selon la revendication 6, **caractérisé en ce que** la tige de positionnement (5) est reliée au mécanisme d'entraînement de manière telle, que la position en hauteur de la tige de positionnement (5) puisse être modifiée dans le sens vertical, où, par conséquent, l'espace vertical de l'élément de serrage supérieur (4) peut être modifié par rapport à l'élément de serrage inférieur (3).

8. Dispositif de serrage (1) selon l'une quelconque des revendications précédentes, **caractérisé en ce que** le mécanisme d'entraînement est un entraînement pneumatique ou commandé par un moteur électrique.

9. Dispositif de serrage (1) selon l'une quelconque des revendications précédentes 6 à 8, **caractérisé en ce que** l'élément de serrage inférieur (3) présente une ouverture ou un évidement, afin que la tige de positionnement (5), dans le sens de sa longueur, soit disposée en traversant l'élément de serrage inférieur (3) dans le sens vertical.

10. Table d'usinage porte-pièces présentant au moins un dispositif de serrage (1) ou plusieurs dispositifs de serrage (1) selon l'une quelconque des revendications 1 à 9, à l'aide duquel ou desquels au moins des pièces individuelles peuvent être usinées dans le sens de leur longueur, et ces pièces à usiner peuvent être introduites, de manière automatisée, dans le dispositif de serrage de la table d'usinage porte-pièces.

11. Table d'usinage porte-pièces selon la revendication 10, **caractérisée en ce que** le dispositif de serrage présente deux éléments de serrage inférieurs et deux éléments de serrage supérieurs, de sorte que le dispositif de serrage forme deux logements de pièces à usiner, grâce à quoi deux pièces à usiner peuvent être reçues et également usinées en même temps, ou bien une surface latérale opposée peut également être usinée après un changement d'outil.

12. Procédé de serrage d'une pièce à usiner dans un dispositif de serrage (1) selon l'une quelconque des revendications 1 à 9, ledit procédé présentant les étapes suivantes consistant :
- à déplacer le mécanisme d'entraînement de l'élément de serrage supérieur (4) dans une position suffisamment haute,
- à introduire la pièce à usiner (2) dans le dispositif de serrage (1), où l'introduction est réalisée de manière automatisée par un préhenseur ou un manipulateur, ou bien est effectuée manuellement par au moins un opérateur de machine,
- à déplacer vers le bas l'élément de serrage supérieur (4) après le positionnement de la pièce à usiner (2),
où le dispositif de serrage (1) présente au moins un élément de butée (19), où la pièce à usiner (2) est introduite dans le dispositif de serrage (1) de manière telle, qu'une surface de côté latérale de la pièce à usiner (2) soit en appui sur au moins une surface latérale de l'élément de butée (19).

13. Procédé selon la revendication 12, **caractérisé en ce que** l'une des surfaces de côté latérales (20) de la pièce à usiner (2) peut être profilée en procédant d'abord par serrage de la pièce à usiner (2), ledit serrage étant effectué dans l'un des deux logements de pièces à usiner (9), où la pièce à usiner (2) est introduite ensuite, sans rotation, dans l'autre logement de pièces à usiner (9), de sorte qu'une autre des surfaces de côté latérales (20) peut être usinée.

14. Procédé selon l'une des revendications 12 ou 13, **caractérisé en ce que** le dispositif de serrage (1) présente deux logements de pièces à usiner (9), où l'une des surfaces de côté latérales (20) de la pièce à usiner (2) est profilée en procédant d'abord par serrage de la pièce à usiner (2), ledit serrage étant effectué dans l'un des deux logements de pièces à usiner (9), où la pièce à usiner est introduite ensuite, sans rotation, dans l'autre logement de pièces à usiner (9), où une autre des surfaces de côté latérales (20) est ensuite usinée.
